# EUROPEAN PATENT APPLICATION

(11) **EP 1 061 622 A2**
(43) Date of publication of application: **20.12.2000**
(21) Application number: 00500064.1
(22) Date of filing: 11.04.2000
(51) Int. Cl.: H02G 1/12

(54) **Station for cutting, trimming and peeling cables**

(30) Priority: 16.06.1999 ES 9901333
(71) Applicant: Lear Automotive (EEDS) Spain, S.L., 43800 Valls, Tarragona (ES); Construcciones Mecanicas Jose Lazpiur, S.A., 20570 Vergara, Guipuzcoa (ES)
(72) Inventor: Casas Aligue, Jordi, 43800 Valls, Tarragona (ES); Mestre Guasch, Jordi, 43800 Valls, Tarragona (ES); Lazpiur Lamariano, Miguel, 20570 Vergara, Guipuzcoa (ES)
(74) Representative: Morgades Manonelles, Juan Antonio

(57) **Abstract**

The station for cutting, trimming and peeling cables of the present invention comprises driving means to move blades not only for the cutting operation but also for the operation to extract the liner. Said blades can move in an ascent and descent vertical movement as well as in a forward-backward longitudinal movement. These movements, when combined with the position of the blades above the liner of the cable, enable extracting the liner of the cable in a first operation which is followed with a second operation that consists in cutting the tips of the conductive portion of the cable.

## Description

The present patent application relates, as stated in its title, to a "STATION FOR CUTTING, TRIMMING AND PEELING CABLES", which novel manufacturing, conformation and design features fulfil the purpose to which they have been specifically conceived, with a maximum safety and effectiveness.

A number of machines specially intended to process cables used in motor vehicles, buses, motorcycles and the like are commercially available, and therefore they are part of the state of the art. Said machines comprise an arrangement of stations which purpose is to carry out a number of operations in cables such as to cut them to length, to extract the liner from their ends, to insert terminals and, in any cases, to put said terminals in the corresponding connectors and to check that the terminals have been properly connected.

Any of the stations in such cable processing machine has been designed to perform manual, automatic or semiautomatic operations depending upon the different type of cables and the operations to be carried out therein.

More particularly, the present invention relates to a station for cutting, trimming and peeling cables for a cable packet processing machine which includes functions such as for cutting, peeling and marking cables, inserting rubbers, crimping, controlling and mounting on different types of connectors. These operations are carried out for average cycles of 4 seconds per wire or cable.

The station for cutting, trimming and peeling cables of the present invention comprises driving means to move blades not only for the cutting operation but also for the operation to extract the liner. Said blades can move in an ascent and descent vertical movement as well as in a forward-backward longitudinal movement. These movements, when combined with the position of the blades above the liner of the cable, enable extracting the liner of the cable in a first operation which is followed with a second operation that consists in cutting the tips of the conductive portion of the cable.

The station for cutting, trimming and peeling cables is provided with two servo motors used to perform said operation of extracting the liner from the cable and cutting the tips thereof. One of said motors drives a pulley and a belt which, in turn, drives a ball spindle at the end of which a further pulley is fitted. Corresponding runners are mounted on a track that is attached on the frame of the machine driving a head in a forward-backward movement to allow extracting the liner of the cables since the blades are stuck into the liner of the cable as the backward movement of the head occurs.

Likewise; the tips of the cable are cut as the liner extracting operation has been completed by the above mentioned means by means of another servo motor that is provided with a piston having a rod acting on the blades.

The station for cutting, trimming and peeling cables is mounted on the corresponding base that is fitted on a horizontal platform. Said platform rests by conventional means on specific stands and section members forming the frame of the machine for processing cables or cable portions.

Said machine, which is the object of the present invention, is further provided with an endless belt to feed the different stations therein. Said endless belt travels in front of all of the stations and it is provided with the corresponding gripping members attached thereto at regular distances to one another to hold and convey the cables.

Further details and features of the present invention will be apparent from the following description, which refers to the accompanying drawings that schematically represent the preferred details which. These details are given by way of example and they refer to a possible case of practical embodiment, but description is not limited to the details disclosed herein and therefore it must be considered from an illustrating point of view and without any type of limitations.

A detailed list of the various parts cited in the present patent application is given below: (10) station for cutting, trimming and peeling cables, (11) chassis, (12) stand, (13) section members, (14) platform, (15) base, (16) blades, (17) servo motor, (18) blade carrier, (19) shaft of servo motor, (20) pinion, (21) rack, (22) rack, (23) pulley of the servo motor, (24) spindle, (25) belt, (26) spindle belt, (27) locking cone, (28) track, (29) head of the station, (30) carriage, (31) runner, (32) stem, (33) cable, (34) conductive portion, (35) liner, (36) gripping member, (36a) grips, (37) pressing member, (38) endless belt, (39) tray, (40) boss, (41) labyrinth, (42) servo motor, (43) shaft of the servo motor, (44) tightening member, (45) gripping member, (46) grips, (47) stems, (48) pneumatic cylinders, (49) tightening means, (50) frame, (51) bearings, (52) void passage, (53) support, (54) grooves, (55) screws, (56) nuts.

Figure nº 1 is a sectional side view of the station (10) for cutting, trimming and peeling cables and more particularly of its head (29).

Figure nº 2 is an end elevational view of the head (29) in the station (10).

Figure nº 3 is a part-way sectional side view of the system for feeding cables (33) of the station (10).

Figure nº 4 is an enlarged part-way sectional side view of the system for horizontal movement of the head (29) by means of the spindle (24).

The station (10) for cutting, trimming and peeling cables is mounted on a frame (50) which is vertically adjustable as it is provided with groves (54), screws (55) and nuts (56), as shown in figures nº 1 and 2. It is mounted on a base (15) that is attached on a platform (14) through tightening means (44). The head (29) of the station (10) is provided on a chassis (11) that is not depicted in the figures as it is a conventional chassis that comprises a stand (12) and standardised section members (13).

In a preferred embodiment of what is the object of the present invention as it can be seen from figure nº 3, a cable packet processing machine with manual loading; that is not shown in the enclosed figures, has a conveying system provided with an endless belt (38) which horizontally and longitudinally moves crosswise in the machine passing on top and on bottom through the section member (13) which is attached to the stand (12) by means of a tightening member (44).

Gripping members (36) are attached on the endless belt (38) at regular distances to one another. The gripping members (36) are provided with grips (36a) which move horizontally and longitudinally the cables (33) in front of the machine and above the tray (39) in the different operations being performed. The operations for cutting, trimming and peeling cables are carried out by the station (10) of the present invention, see figure nº 1.

The tray (39) is fastened to the stand (12) by appropriate means, as it can be seen from figure nº 3, and it is intended to prevent the different parts of the cable processing machine from being interfered by the cables (33).

Attached to the stand (12) is the pressing member (37) of the gripping member (36) which serves the purpose to align said gripping member (36) when it is stopped at the station (10) as it is driven by the endless belt (38), see figure nº 1.

Figure nº 2 shows the arrangement that enables peeling of cables (33). Such operation is carried out by the blades (16) which move in an ascent and descent vertical movement as they are attached to the blade carrier (18). Said blade carrier (18) is mounted on stems (47) attached to tracks (28), said track (28) being attached to pneumatic cylinders (48) and to the rack (21) through a pinion (20).

Arrangement which enables extract the liner from the cables (33) is shown in figure nº 4. Such operation is carried out by moving the head (29) horizontally backwards and to the right in figure nº 4. The head (29) is moved by a spindle (24) sliding by means of runners (31) through the track (28) that is mounted at the lower part of the frame (50).

One of the ends of the spindle (24) is attached to the pulley (26) by appropriate means, said pulley (26) being kinematically linked to the pulley (23) of the servo motor (17) by means of a toothed belt (25). The toothed belt (25) joins the shaft (19) of the servo motor (17) with the pulley (23) by any known means as shown in figures nº 1 and 4.

The operation for cutting, trimming and peeling cables (3) is carried out by the combination of the following movements:
a) Holding the cable (33) by the grips (36a, 46) of the gripping members (36, 45).
b) Moving the head (29) from back to front.
c) Moving the blades (16) in a vertical approaching movement swooping down on the cable (33) and its liner (35).
d) Moving back the head (29) from left to right by the spindle (24) which is driven by the servo motor (19). Then, a piece of liner (35) drops into the void passage (52) as shown in figure nº 1.
e) Moving away the blades (16) in a vertical movement.
f) Moving the head (29) from right to left.
g) Opening the grips (46) of the gripping member (45), see figure nº 3.
h) Moving the cable (33) away to next station in a horizontal movement by the gripping member (36) taking the peeled and cut cable (33) away.

General operation of the station (10) is as follows:
1^{st} The cable (33) arrives at the station conveyed by the endless belt (38) held between the grips (36a) of the gripping member (36), and the grips (46) of the gripping member (45) which were open then close on said cable (33).
2^{nd} Approaching the blades (16) which are mounted on the blade carriers (18) that are vertically driven by the cylinders (48) through tracks (28) sliding in the rack (21, 22) and helped by the pinions (20).
3^{rd} Moving the head (29) back as the spindle (24) rotates causing the frame (50) to move by the runners (31) sliding on the track (28). Angular movement of the spindle (24) is achieved by the bearings (51), the locking cone (27) and the pulley (26). The pulley (26) is joined by one of its ends to said spindle (24) and it is also joined to the pulley (23) by the toothed belt (25), said pulley (23) being mounted at one end of the shaft (19) of the servo motor (17).
4^{th} Moving the head (29) forward as described in 3^{rd} point.
5^{th} Opening the blades (16) as described in 2^{nd} point and then slightly moving the head (29) back.
6^{th} Closing the blades (16) again and cutting the tips of the conductive portion (34) of the cables (33), and then the blades (16) being moved away again.
7^{th} Opening the grips (36a) of the gripping member (46) and collecting the cable (33) by means of the gripping member (45), the cable (33) being still conveyed by the endless belt (38) to a next station.

Forward and backward movements of the blades (16) and the blade carriers (18) can be adjusted by appropriate means depending upon the features of the cable (33) to be suited to the thickness of the liner (35) and to the cross-section of the conductive portions (34) of the cable (33) since each type of cable (33) is provided with liners (35) and conductive portions (34) having different cross-section.

The servo motors (17) and (42), the spindle (24) and the blades (16) together with the gripping members (36, 45) are controlled by the software of the corresponding computer which, in short, enables the different movements to be performed by said parts according to the commands thereof.

Once having been sufficiently described what the present patent application consists in accordance to the enclosed drawings, it is understood that any detail modification can he introduced as appropriate, provided that variations may alter the essence of the invention as summarised in the appended claims.

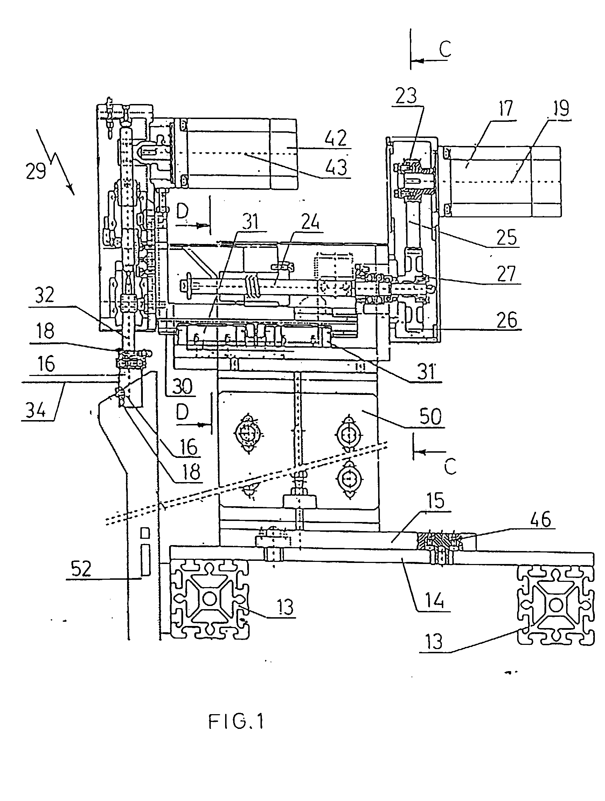

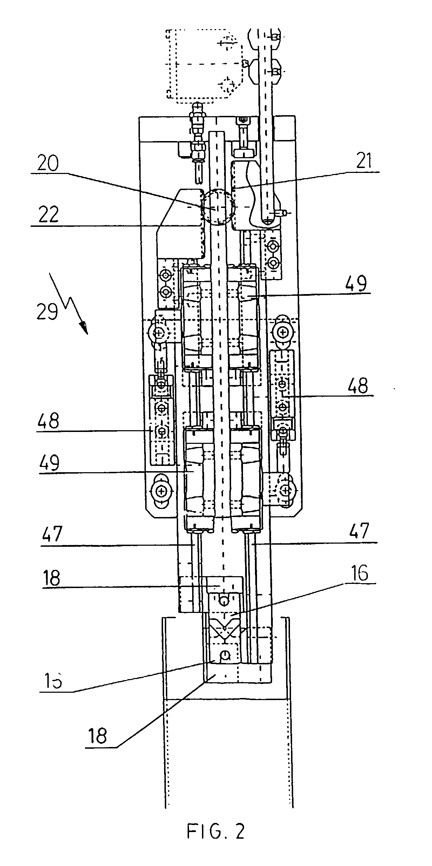

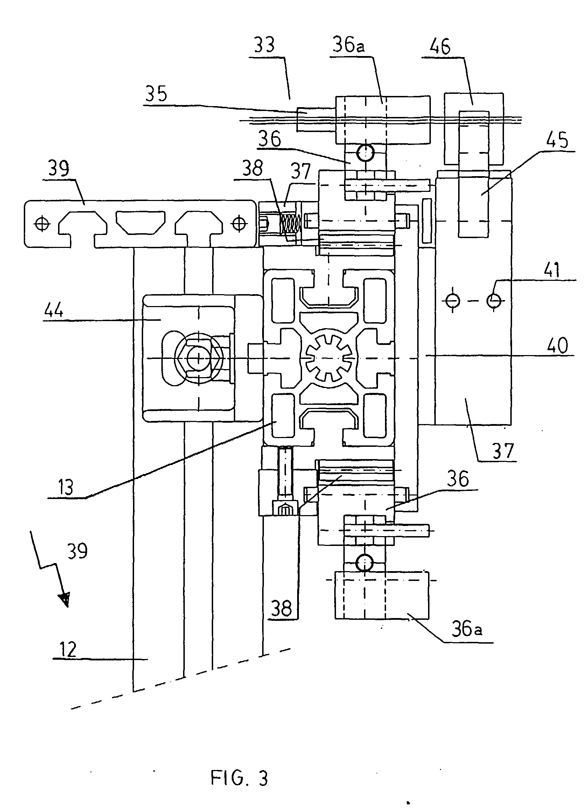

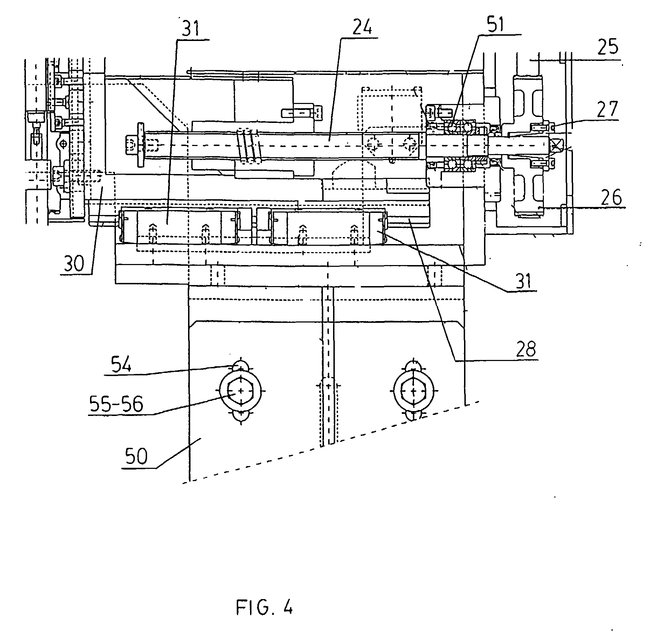

## Claims

1. "STATION FOR CUTTING, TRIMMING AND PEELING CABLES", said cables (33) comprising a conductive portion (34) covered with a liner (35) and being held by gripping members (36) attached to an endless belt (38) which is driven in a horizontal movement travelling across a cable packet processing machine, the cables (33) being conveyed by means of said gripping members (45) between their grips (36a) to perform the different operations thereon, the grips (46) of the gripping member (45) being kept. closed fitted in said station (10) helped by a boss (40) and a labyrinth (41), the endless belt (38) being mounted on section members (13) which are fastened by means of a tightening member (44) on stands (12) provided in the machine, a platform (14) and a base (15) being secured on such stands (12) in the station (10), characterised in that said station (10) for cutting, trimming and peeling cables comprises a head (29) which moves vertically and from right to left by means of servo motors (42, 52) acting on a spindle (24) through appropriate means, said spindle (24) being rotated and moved by means of runners (31) which are mounted horizontally on a track (28) fitted on the base (15) of the chassis (11) by means of a support (53) that allows fastening said stand (29) helped by grooves (54), screws (55) and nuts (56), blades (16) which are fitted in blade carriers (18) acting on the liner (35) of the cable (33) and on the conductive portion (34) are used to perform the operation for extracting the liner (35) of the cable, and then the servo motor (42) causing the head (29) to move from left to right and vice versa to perform the operation for cutting the tips of the conductive portion (34).

2. "STATION FOR CUTTING, TRIMMING AND PEELING CABLES" as claimed in claim 1, characterised in that the shaft (19) of the servo motor (17) acts on a pulley (23) driving a toothed belt (25) which rotates a pulley (26) that is mounted in one end of the spindle (24) which rotates on bearings (51) causing the head (29) to be moved in a forward-backward movement helped by runners (31) mounted on a track (28), said spindle (24) allowed to be released by means of a locking cone (27).

3. "STATION FOR CUTTING, TRIMMING AND PEELING CABLES" as claimed in any of the preceding claims, characterised in that as the head (29) moves from right to left by means of the servo motor (17) and the spindle (24), the blades (16) fitted in the blade carriers (18) are moved in a vertical approaching and away movement driven by the shaft (43) of the servo motor (42) acting on stems (47) by the appropriate means that are joined to tracks (28) which are attached to pneumatic cylinders (48) by means of a rack (21) through a pinion (20).

4. "STATION FOR CUTTING, TRIMMING AND PEELING CABLES" as claimed in claim 1; characterised in that the operation for cutting, trimming and peeling of cables (33) is the combination of the following movements:
a) Holding the cable (33) by the grips (36a, 46) of the gripping members (36, 45).
b) Moving the head (29) from back to front.
c) Moving the blades (16) in a vertical approaching movement swooping down on the cable (33) and its liner (35).
d) Moving back the head (29) from left to right by the spindle (24) which is driven by the servo motor (19). Then, a piece of liner (35) drops into a void passage (52).
e) Moving away the blades (16) in a vertical movement.
f) Moving the head (29) from right to left.
g) Opening the grips (46).
h) Moving the cable (33) away to a next station in a horizontal movement by means of the gripping member (36).

5. "STATION FOR CUTTING, TRIMMING AND PEELING CABLES" as claimed in claim 1, characterised in that the operations carried out by said station are the following:
a) The cable (33) arrives at the station conveyed by the endless belt (38) held between the grips (36a) of the gripping member (36), and the grips (46) of the gripping member (45) which were open then close holding said cable (33).
b) Approaching the blades (16) which are mounted on the blade carriers (18) vertically driven by the cylinders (48) through tracks (28) sliding in the rack (21, 22) and helped by the pinions (20).
c) The head (29) moves back as the spindle (24) rotates causing the frame (50) to be moved by the runners (31) sliding on the track (28). The angular movement of the spindle (24) is achieved by the bearings (51), the locking cone (27) and the pulley (26). The pulley (26) is joined by one of its ends to said spindle (24) by the toothed belt (25) to the pulley (23) which is mounted at one end of the shaft (19) of the servo motor (17).
d) The head (29) moves forward as described in point c).
e) Opening the blades (16) as described in point d).
f) The blades (16) close again and cut the tips of the conductive portion (34) of the cables (33), and then they open again.
g) The gripping member (45) opens its grips (46) and the gripping member (36) with the cable (33) which is still conveyed to a next station driven by the endless belt (38).
